# EUROPÄISCHE PATENTSCHRIFT

(11) **EP 1 534 637 B1**
(45) Veröffentlichungstag und Bekanntmachung des Hinweises auf die Patenterteilung: **16.08.2006**
(21) Anmeldenummer: 03793823.0
(22) Anmeldetag: 04.09.2003
(51) Int. Cl.: C02F 1/68, C02F 3/34

(54) **VERFAHREN ZUR ENTFERNUNG VON ÖL UND FETT BZW. ÖLHALTIGEN UND FETTHALTIGEN VERSCHMUTZUNGEN**
METHOD FOR ELIMINATING OIL AND FAT OR POLLUTANTS CONTAINING OIL AND FAT
PROCEDE D'ELIMINATION D'HUILES ET DE GRAISSES OU DE MATIERES POLLUANTES CONTENANT DES HUILES ET DES GRAISSES

(30) Priorität: 06.09.2002 AT 13402002
(43) Veröffentlichungstag der Anmeldung: 01.06.2005
(73) Patentinhaber: Astleithner, Franz Josef, 2700 Wiener Neustadt (AT)
(72) Erfinder: Astleithner, Franz Josef, 2700 Wiener Neustadt (AT)
(74) Vertreter: Müllner, Erwin
(86) Internationale Anmeldenummer: PCT/EP2003/050608
(87) Internationale Veröffentlichungsnummer: WO 2004/022494

(56) Entgegenhaltungen:
- WO-A-00/56668
- FR-A- 2 249 039
- US-A- 4 415 662
- US-A- 5 618 727
- ATLAS R M: "MICROBIAL DEGRADATION OF PETROLEUM HYDROCARBONS: AN ENVIRONMENTAL PERSPECTIVE" MICROBIOLOGICAL REVIEWS, AMERICAN SOCIETY FOR MICROBIOLOGY, WASHINGTON, DC, US, Bd. 45, Nr. 1, März 1981 (1981-03), Seiten 180-209, XP009010634 ISSN: 0146-0749
- ATLAS R M: "MICROBIAL HYDROCARBON DEGRADATION-BIOREMEDIATION OF OIL SPILLS" JOURNAL OF CHEMICAL TECHNOLOGY AND BIOTECHNOLOGY. (INTERNATIONAL JOURNAL OF BIOTECHNICAL AND CHEMICAL PROCESSES), ELSEVIER APPLIED SCIENCE PUBLISHERS. BARKING, GB, Bd. 52, Nr. 2, 1991, Seiten 149-156, XP000227219 ISSN: 0268-2575

## Beschreibung

### TECHNISCHES GEBIET

Die Erfindung bezieht sich auf ein Verfahren zur Entfernung von Öl und Fett bzw. ölhaltigen und fetthaltigen Verschmutzungen aus Gewässern und Böden unter Verwendung von Tensiden.

### STAND DER TECHNIK

Im Zuge einer ständig wachsenden Nutzung von Gewässern zu Transportzwecken (Schifffahrt) steigt auch das Kontaminationsrisiko, hervorgerufen durch unzureichende Sicherheitsvorkehrungen und dadurch bedingte Unfälle. Immer wieder kommt es zu Ölaustritt mit katastrophalen Auswirkungen für die Umwelt. Auch bei Unfällen von Tankwagen sowie durch Leckwerden von Lagerbehältern von Öl erfolgt oft eine die Umwelt gefährdende Verschmutzung von Erdreich.

Sofern eine von der Wasserbewegung abhängige Absaugung von aufschwimmenden Ölschichten bzw. ein Binden des Öls durch ölbindende Mittel möglich ist, kann damit zwar die Hauptmenge der Ölphase entfernt werden, der als Ölfilm mit Schichtdicken im Mikrometerbereich sowie als gelöste Ölanteile verbleibende bzw. in das Erdreich versickerte Rest stellt jedoch noch immer eine erhebliche Belastung für Ökosysteme und Menschen dar. Zur Entfernung dieser Restkontamination besteht ein Bedarf an effizienten und umweltschonenden Verfahren. Zur Behandlung von Ölfilmen werden mitunter auch oberflächenaktive Substanzen (Tenside) eingesetzt. Die Tenside bringen das Öl in Lösung, wodurch ein Ölfilm zwar nicht mehr sichtbar ist, die Schadstoffe selbst sind jedoch nach wie vor vorhanden. Es kommt zu keiner Reinigung des Gewässers, sondern es findet eine Ausbreitung der Kontamination statt.

Aus der WO 00/56668 A ist ein Verfahren der eingangs genannten Art bekannt, wobei Bakterien zum Einsatz kommen, die Methan, Propan oder Butan aerob und fakultativ angerab verwerten.

### OFFENBARUNG DER ERFINDUNG

Ziel der Erfindung ist daher die Bereitstellung eines Verfahrens mit dem es möglich ist, die in Gewässern oder Böden verbleibenden Reste an Öl oder Fett zu entfernen. Das Verfahren zur Erreichung dieses Zieles ist erfindungsgemäß dadurch gekennzeichnet, dass auf das Erdreich ein Tensidgemisch aus etwa 11 Gew.-teilen mit 9 Ethoxygruppen ethoxiliertem Isotridecanol, etwa 4 Gew.-teilen Natrium-2-ethylhexylsulfat, etwa 2 Gew.-teilen essentielle Öle von Limette, Zitrone und/oder Orange und etwa 82 Gew.-teilen Wasser sowie eine Bakteriensuspension aus Rhodopseudomonas, Rhodospirillum, Thiobacillus novellas, Thiobacillus thiooxidans, Thiobacillus denitrificans, Thiobacillus thioparus, Pseudomonas fluorescens, Pseudomonas citronellolis, Alcaligenes denitrificans, Flavobacter aquatile, Flavobacter oceanosedimentum, Nitrobacter winogradski, Nitrosomonas europaea, Comamonas testosteroni, Bacillus macerans und Serratia liquifaciens in einem Volumenverhältnis von etwa 1:3 aufgesprüht werden.

Durch die Kombination des erfindungsgemäß als Lösungsvermittler eingesetzten Tensidgemisches mit den schadstoffabbauenden Bakterien kommt es bei ausreichender Nährstoffversorgung zu einem effizienten Öl- und Fettabbau. Voraussetzung für einen mikrobiellen Abbau ist die Überführung der hydrophoben Schadstoffe (Öl-Komponenten) in die wässrige Phase, wodurch sie den Mikroorganismen zugänglich gemacht werden. Dieser Massentransfer-Prozess wird durch den Einsatz des erfindungsgemäß verwendeten Tensidgemisches beschleunigt bewirkt. Durch die aufgesprühte Bakteriensuspension kommt es zu einer Mineralisierung der Mineralöl-Kohlenwasserstoffe, d.h. zu einem Abbau des Öls zu CO₂ und Wasser.

Die erfindungsgemäß verwendete Bakteriensuspension ist ein mikrobielles Konsortium aus mehreren Bakterienstämmen, das optimiert wurde zum Abbau von Erdöl und Erdölderivaten, von Ö1 und Ölderivaten sowie ölähnlichen Produkten wie Harze, Fette usw. unter aeroben und anaeroben Bedingungen. Die essentiellen Öle (Orangenterpene) sind erforderlich, um die Bakterien lipophil zu machen.

Um für einen raschen Abbau der Öle und Fette günstige Bedingungen zu schaffen, müssen ausreichende Nährstoffe für die Bakterien vorhanden sein. Nach einem weiteren Merkmal der Erfindung werden daher etwa 10 Gew.-% Nährstoffe, nämlich Stickstoff- und Phosphorquellen, bezogen auf das eingesetzte Tensidgemisch, auf die Wasseroberfläche oder das Erdreich aufgebracht. Zur Gewährleistung optimaler Abbaubedingungen werden erfindungsgemäß als Stickstoffquelle KNO₃ und als Phosphorquelle KH₂PO₄ oder Na₂HPO₄ in einem Verhältnis von C:N:P gleich 100:10:1 aufgebracht.

Bevorzugt sind auf eine mit 0,5% = 55p = 0,5 Liter Öl je m² verschmutzte Wasseroberfläche etwa 0,5 Liter Bakteriensuspension und etwa 0,17 Liter Tensidgemisch, z.B. mittels Sprühgerät aufzubringen. Auf ein Erdreich, das mit Öl verunreinigt wurde, ist im Verhältnis Öl:Bakteriensuspension:Tensidgemisch:Nährstoffe wie 30:30:10:1 vorzugehen.

### BESTE AUSFÜHRUNGSFORM DER ERFINDUNG

Die folgenden Experimente dienen der Erläuterung der Erfindung.

Zur Durchführung der Experimente wurde Donauwasser herangezogen. 20 L Probe wurden am 8.4.2002 bei der Schiffsanlegestelle Tulln entnommen. Die Außentemperatur betrug 10,9°,C, die Wassertemperatur 9,8°C. Weiters wurden vor Ort die Parameter pH, Leitfähigkeit und Sauerstoffgehalt gemessen. Die Probe wurde im Labor auf die Parameter pH, Leitfähigkeit, Redoxpotenzial, Gehalt an organischem Kohlenstoff (TOC), Kohlenwasserstoff-Gehalt, Nitrat-Stickstoff, Ammonium-Stickstoff, Gesamt-Stickstoff, Gesamt-Phosphat und Ortho-Phosphat untersucht.

Die Schadstoffextraktion wurde nach ÖNORM M 6608-1 (modifiziert) durchgeführt. Zur Ermittlung störender Einflüsse des Tensides auf die Extraktion wurden Vorversuche durchgeführt. Dazu wurden Wasserproben mit verschiedenen Konzentrationen an Diesel versetzt und mit sowie ohne Tensidzusatz extrahiert. Weiters wurden Wasserproben nur mit Tensid versetzt und extrahiert. Als Folge dieser Versuche wurde eine Aufreinigung des Extraktes mit einer erhöhten Menge an Aluminiumoxid durchgeführt. Dadurch konnte eine Beeinflussung der Messung durch Tensidreste vermieden werden.

Für die Abbauversuche wurde das Volumen der Wasserprobe auf 30 mL pro Erlenmeyerkolben (100 mL) festgelegt. Die Dotierung erfolgte mit Diesel der Shell-Tankstelle Tulln (2002-04-09). Die Einsatzkonzentration wurde auf 0,5% (v/v) Diesel festgelegt, woraus sich für den aufschwimmenden Ölfilm eine Schichtdicke von 55 µm ergab. Der Diesel wurde mittels Stepper unter Kontrolle der Einwaage mittels einer Analysenwaage zugesetzt. Das verwendete Tensidgemisch gemäß der Erfindung wurde in einer Konzentration von 0,17% (v/v) ebenfalls mittels Stepper zugesetzt. Von der Bakteriensuspension wurden 0,5% (v/v) zum jeweiligen Ansatz pipettiert.

Folgende Versuchsansätze wurden durchgeführt: Donauwasser plus Tensidgemisch (R), Donauwasser plus Bakteriensuspension (B), Donauwasser plus Tensidgemisch und Bakterien (RB), eine biotische Kontrolle (KB) und eine abiotische Kontrolle (KA) jeweils in dreifachem Ansatz. Bei der biotischen Kontrolle wurde dem Donauwasser nur Diesel zugesetzt. Die abiotische Kontrolle wurde zur Unterdrückung von mikrobieller Abbautätigkeit mit Natriumazid versetzt. Probennahme und Extraktion der Schadstoffe erfolgte an den Tagen 0,1,2,4,8,16 und 25 gerechnet vom Start des Experiments. Zur Gewährleistung optimaler Abbaubedingungen wurden der Wasserprobe die Nährstoffe Stickstoff (KNO₃) und Phosphor (KH₂PO₄, Na₂HPO₄) im Verhältnis C:N:P = 100:10:1 zugesetzt. Zur Simulation praxisrelevanter Abbaubedingungen erfolgte das Experiment bei 10°C. Die Sauerstoffversorgung und Durchmischung wurde durch Einsatz eines Großschüttler erzielt.

Zur Vermeidung hoher Evaporationsverluste flüchtiger Dieselanteile wurden Kolben mit Teflon-gedichteten Schraubverschlüssen eingesetzt. Nach Berechnung des Sauerstoffbedarfes wurden die Kolben anfänglich nur halb verschlossen, um eine Limitierung des Abbauprozesses zu verhindern. In weiterer Folge (ab Tag 8) waren die Proben in der Nacht voll verschlossen, tagsüber (von 8:00 bis 15:00) war der Schraubverschluss halb geschlossen.

Die Messungen wurden sowohl an der Wasser-Entnahmestelle durch den Einsatz von Feldgeräten sowie im Labor durchgeführt. Die Ergebnisse sind in der nachfolgenden Tabelle dargestellt. Basierend auf den ermittelten Daten war der Zusatz von Nährstoffen (Stickstoff, Phosphor) erforderlich. Die übrigen Parameter befinden sich in einem Bereich, der einen mikrobiellen Schadstoffabbau zulässt.

| Messungen vor Ort | |
|---|---|
| Probennahme | 2002-04-08 |
| Ort | Schiffsanlegestelle Tulln |
| Zeit | 13:30 |
| Menge | 25 L, |
| Außentemperatur | 10, 0 °C |
| Wassertemperatur | 9,8 °C |
| Sauerstoffgehalt | 12,24 mg/L |
| Leitfähigkeit | 413 µS/cm |
| pH | 7,2 |

| Messungen im Labor | |
|---|---|
| pH | 7,3 |
| Leitfähigkeit | 422 µS/cm bei 25°C |
| Redoxpotenzial | 348,9 mV bei 10°C |
| TOC | 24,47 mg/L |
| KW | n.n* mg/L |
| NO₃⁻-N | 2,15 mg/L |
| NH₄⁺-N | 0,04 mg/L |
| Total-N (Dr. Lange) | 2, 73 mg/L |
| Ortho-Phosphat-P | <0,05 mg/L |
| Gesamt-Phosphat-P | <0,05 mg/L |

| | |
|---|---|
| * n.n. nicht nachweisbar | |

Die Experimente wurden bei 10°C durchgeführt. Die Abbaugeschwindigkeit liegt bei gesteigerten Temperaturen sicherlich höher, allerdings sollten durch die Versuche auch Rückschlüsse auf das Abbauverhalten in der kälteren Jahreszeit ermöglicht werden.

Es wurde eine Abnahme der Dieselkonzentration in allen Versuchsansätzen festgestellt. Der geringste Rückgang (8%) wurde für die vergiftete Kontrolle verzeichnet und ist auf eine Verflüchtigung von leichten Diesel-Komponenten zurückzuführen. Ein mikrobieller Abbau von Kohlenwasserstoffen wurde in der nicht vergifteten Kontrolle festgestellt (Rückgang der Dieselkonzentration um 31%). Die Zugabe von Mikroorganismen allein könnte diesen Abbaugrad nicht steigern (Rückgang der Dieselkonzentration um 30%). Der Zusatz von Tensidgemisch resultierte jedoch in einem drastischen Anstieg des Abbaugrades (65%). Eine zusätzliche Steigerung des Kohlenwasserstoff-Abbaus (74%) wurde durch den kombinierten Einsatz von Tensidgemisch und Bakteriensuspension Microbe-Lift Hog erzielt. Der Abbau für die Ansätze mit Tensidgemisch dürfte auch nach Abschluss des Experimentes (25 Tage) weitergehen, wodurch noch niedrigere Restkontaminationen erzielbar sind.

## Patentansprüche

1. Verfahren zur Entfernung von Öl und Fett bzw. ölhaltigen und fetthaltigen Verschmutzungen aus Gewässern und Böden unter Verwendung von Bakterien und Tensiden, **dadurch gekennzeichnet, dass** auf die Wasseroberfläche bzw. auf das Erdreich ein Tensidgemisch aus etwa 11 Gew.-teilen mit 9 Ethoxygruppen ethoxiliertem Isotridecanol, etwa 4 Gew.-teilen Natrium-2-ethylhexylsulfat, etwa 2 Gew.-teilen essentielle Öle von Limette, Zitrone und/oder Orange und etwa 82 Gew.-teilen Wasser sowie eine Bakteriensuspension aus Rhodopseudomonas, Rhodospirillum, Thiobacillus novellas, Thiobacillus thiooxidans, Thiobacillus denitrificans, Thiobacillus thioparus, Pseudomonas fluorescens, Pseudomonas citronellolis, Alcaligenes denitrificans, Flavobacter aquatile, Flavobacter oceanosedimentum, Nitrobacter winogradski, Nitrosomonas europaea, Comamonas testosteroni, Bacillus macerans und Serratia liquifaciens in einem Volumenverhältnis von etwa 1:3 aufgesprüht werden.

2. Verfahren nach Anspruch 1, **dadurch gekennzeichnet, dass** zusätzlich etwa 10 Gew.-% Nährstoffe, nämlich Stickstoff- und Phosphorquellen, bezogen auf das eingesetzte Tensidgemisch, auf die Wasseroberfläche oder das Erdreich aufgebracht werden.

3. Verfahren nach Anspruch 2, **dadurch gekennzeichnet, dass** als Stickstoffquelle KNO₃ und als Phosphorquelle KH₂PO₄ oder Na₂HPO₄ in einem Verhältnis von C:N:P gleich 100:10:1 aufgebracht werden.

4. Verfahren nach einem der Ansprüche 1 bis 3, **dadurch gekennzeichnet, dass** auf eine mit etwa 0,5 l Öl pro m² verschmutzte Wasser- oder Erdreichoberfläche etwa 0,5 l Bakteriensuspension und etwa 0,17 l Tensidgemisch aufgebracht werden.

## Claims

1. Process for removing oil and fat or oil-containing and fat-containing pollutants from bodies of water and soils using bacteria and surfactants, **characterized in that** a surfactant mixture comprising about 11 parts by weight of isotridecanol ethoxylated with 9 ethoxy groups, about 4 parts by weight of sodium 2-ethylhexylsulphate, about 2 parts by weight of essential oils of lime, lemon and/or orange and about 82 parts by weight of water and a bacteria suspension comprising Rhodopseudomonas, Rhodospirillum, Thiobacillus novellas, Thiobacillus thiooxidans, Thiobacillus denitrificans, Thiobacillus thioparus, Pseudomonas fluorescens, Pseudomonas citronellolis, Alcaligenes denitrificans, Flavobacter aquatile, Flavobacter oceanosedimentum, Nitrobacter winogradski, Nitrosomonas europaea, Comamonas testosteroni, Bacillus macerans and Serratia liquifaciens in a volume ratio of about 1:3 are sprayed onto the water surface or onto the earth.

2. Process according to Claim 1, **characterized in that** in addition about 10% by weight of nutrients, namely nitrogen and phosphorus sources, based on the surfactant mixture used, are applied to the water surface or the earth.

3. Process according to Claim 2, **characterized in that** KNO₃ is applied as the nitrogen source and KH₂PO₄ or Na₂HPO₄ is applied as the phosphorus source, in a C:N:P ratio equal to 100:10:1.

4. Process according to any of Claims 1 to 3, **characterized in that** about 0.5 1 of bacteria suspension and about 0.17 l of surfactant mixture are applied to a water or earth surface contaminated with about 0.5 l of oil per m².

## Revendications

1. Procédé d'élimination d'huiles et de graisses, plus particulièrement de souillures ou d'impuretés huileuses ou graisseuses, contenues dans des eaux ou sur le sol, faisant emploi de bactéries et d'agents tensioactifs, **caractérisé en ce que** l'on pulvérise respectivement sur la surface des eaux ou sur la surface du sol un mélange tensio-actif formé de 11 % en poids d'un iso-tridécanol éthoxylé par 9 groupes éthoxy, environ 4% en poids de 2-éthylhexylsulfate de sodium, environ 2% en poids d'une huile essentielle de limette, de citron et/ou d'orange et environ 82% en poids d'une suspension de bactéries consistant en rhodopseudomonas, rhodospirillum, thiobacillus novellas, ,thiobacillus thioxidans, thiobacillus denitrificans, thiobacillus thioparus, pseudomonas fluorescens, pseudomonas citronellolis, alcaligenes denitrificans, flavobacter aquatile, flavobacter oceanosedimentum, nitrobacter Winogradski, nitrosomonas europeae, comamonas testosteroni, bacillus macerans et serratia liquifaciens, dans une proportion volumique d'environ 1/3.

2. Procédé selon la revendication 1, **caractérisé en ce que** on applique en outre sur la surface des eaux ou sur la surface du sol, un nutrient, respectivement une source d'azote ou une source de phosphore, en une proportion d'environ 10% en poids exprimés par rapport à la quantité d'agent tensioactif employé.

3. Procédé selon la revendication 2, **caractérisé en ce que** on applique en tant que source d'azote KNO3 et en tant que source de phosphore KH2PO4 ou NaHPO4, en une proportion C/N/P égale à 100/10/1

4. Procédé selon une quelconque des revendication 1 à 3, **caractérisé en ce que**. l'on applique sur la surface du sol ou sur la surface d'eaux souillée par environ 0,5 d'huile par m2 d'une suspension de 0,5 d'une suspension de bactéries et environ 0,17 d'un mélange d'agents tensio-actifs.
